# EUROPEAN PATENT APPLICATION

(11) **EP 4 585 462 A1**
(43) Date of publication of application: **16.07.2025**
(21) Application number: 24461503.5
(22) Date of filing: 09.01.2024
(51) Int. Cl.: B60N 2/838, B60N 2/844, B60N 2/856

(54) **SEAT HEADREST**

(71) Applicant: B/E Aerospace Fischer GmbH, 84034 Landshut (DE)
(72) Inventor: KOLODZIEJCZAK, Marcin Szymon, 51-317 Wroclaw (PL)
(74) Representative: Dehns

(57) **Abstract**

A seat headrest comprising: a headrest frame (12) having: a lower frame part (14) configured to be attached to a seat back; an upper frame part (24) pivotally attached to the lower frame part at a pivot point to be moveable between a fully open position and a folded position; and a locking mechanism (40) at the pivot point to releasably lock the upper frame part relative to the lower frame part in the fully open position and the folded position, the locking mechanism including a release member (42) for operation by a user to release the lock to enable the upper frame part to be pivoted relative to the lower frame part.

## Description

### TECHNICAL FIELD

The present disclosure relates to a headrest for a seat such as, but not exclusively, for a seat in a vehicle or aircraft or any other seat where improved access to an area behind the seat may be required.

### BACKGROUND

Seats, particularly in vehicles or in other environments where a user is seated while performing tasks, such as a pilot seat in an aircraft or a helicopter pilot seat, are often provided with a head rest portion extending from the seat back to support the user's head while seated for increased safety and comfort. Some headrests are formed integrally with the seat back. Others may be mounted permanently or removably to the seat and may be adjustable in height or angle to accommodate users of different sizes.

Whilst such headrests are desirable in terms of comfort and safety, there may be situations where the headrest obstructs the user's access to an area behind the seat. In a helicopter, for example, there is often a shelf or storage area behind a seat, or, in aircraft or other environments, the user may need to access controls, lights, accessories or other things from the area behind the seat without actually moving to the area behind the seat. Because of the task that the user is performing, or because of space constraints or for other reasons, the user may need to access the area behind the seat by just reaching back behind the seat from a seated position or from a position at the front of the seat. The headrest may, however, obstruct the access to the area behind the seat.

There is a need for a headrest design that improves access to an area behind a seat from an area at the front of the seat.

### SUMMARY

According to the disclosure, there is provided a headrest having a first part mountable to a seat back and a second part pivotal relative to the first part between a first position and a second position, and means for locking the second part in each of the first position and the second position.

In one aspect, there is provided a seat headrest comprising: a headrest frame having: a lower frame part configured to be attached to a seat back; an upper frame part pivotally attached to the lower frame part at a pivot point to be moveable between a fully open position and a folded position; and a locking mechanism at the pivot point to releasably lock the upper frame part relative to the lower frame part in the fully open position and the folded position, the locking mechanism including a release member (42) for operation by a user to release the lock to enable the upper frame part to be pivoted relative to the lower frame part.

The release member may be a push button and may be mounted to a second end of the shaft.

The locking mechanism may comprise a shaft extending through an opening in the upper and the lower frame parts at the pivot point, a locking member mounted on the shaft at a first end, and a spring arranged to bias the locking member into locking engagement with the opening. The spring may secured between the push button and the frame to bias the push button away from the frame

The locking member may be provided with locking features and the opening may define receptacles shaped to receive the locking features in the fully open and the folded positions, and wherein the locking features are moved out of engagement with the receptacles by operation of the release member to permit pivotal movement of the upper frame part relative to the lower frame part.

The shaft may have one or more flat surfaces to prevent rotation of the shaft in the opening when in the locked position.

The head rest may comprise cushioning over the frame.

### BRIEF DESCRIPTION

Figure 1 shows an example of a seat to which a headrest according to this disclosure is mounted.

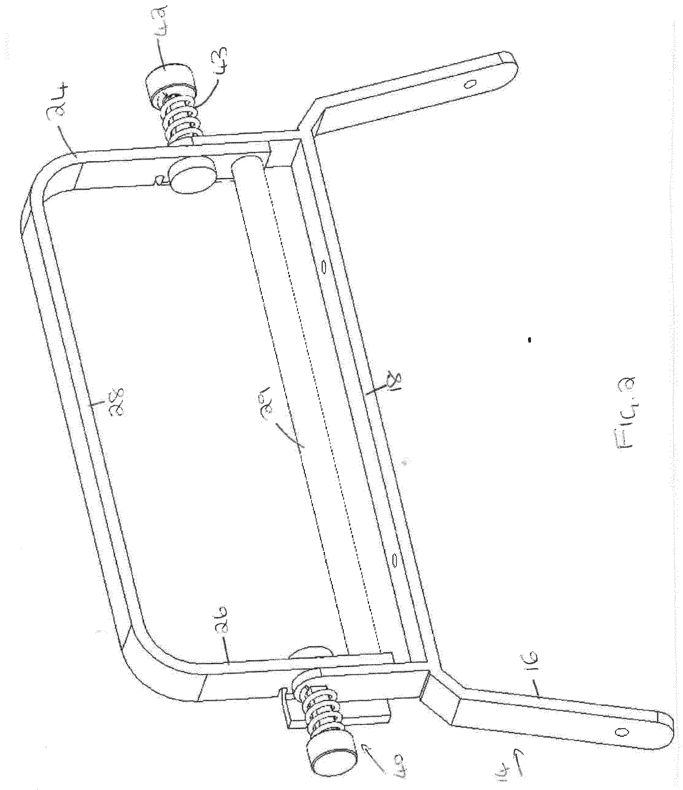

Figure 2 shows a headrest according to the disclosure.
Figure 3A shows a headrest according to this disclosure in a first position.
Figure 3B shows a headrest according to this disclosure in a second position.
Figure 4 shows a detail of a headrest according to the disclosure.
Figure 5 shows a detail of a locking mechanism of a headrest according to the disclosure.
Figure 6 shows a detail of a locking mechanism according to this disclosure.

### DETAILED DESCRIPTION.

Examples of the headrest according to the disclosure will now be described with reference to the drawings. It should be noted that these are examples only and that variations are possible within the scope of the claims.

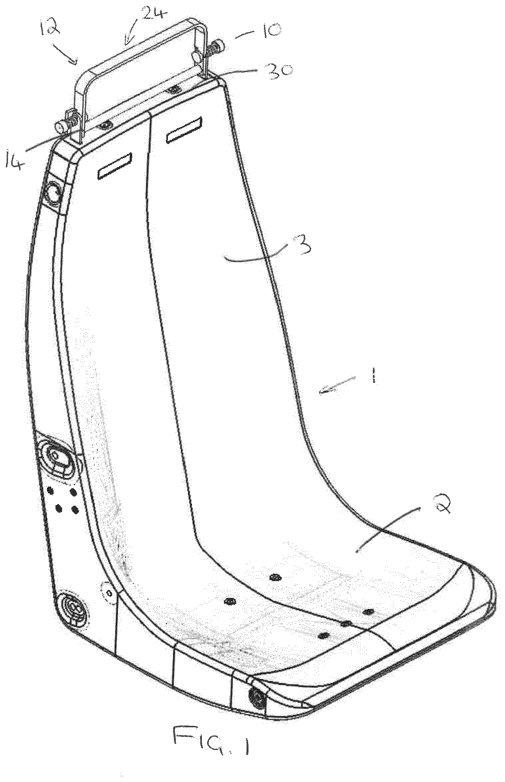

Figure 1 shows an example of a seat 1 to which the headrest 10 of the disclosure can be mounted. The seat shown in the example is the type of seat that may be fitted in a helicopter or other aircraft or vehicle, but the headrest can be used with any type of seat in any environment.

The seat has a seat base or seat pan 2 and a seat back 3. The seat may, in other examples, also be provided with one or two arm rests. The seat may be adjustable in position and/or height and/or angle and/or the seat base and the seat back may be adjustable in position, angle, height, relative to each other as is known for seats.

The headrest 10 is mounted to the top 30 of the seat back 3 as will be described further below. This is positioned to provided support for the back of a user's head when they are seated in the seat. Typically, headrests are formed either integrally with the seat back or are a separate part that can be fitted to the top of the seat back e.g. by insertion of legs extending from the headrest into slots or holes in the seatback dimensioned to receive the legs. A headrest typically has a frame to define the shape and structure of the headrest and some form of cushioning or padding over or around the frame to provide comfort. Similar to typical headrests, the headrest of this disclosure has a frame 12 and, for use, cushioning of some sort would be provided around or on the frame. The cushioning can be of any type suitable for fitting around or onto the frame and may or may not be removable for repair, replacement or cleaning, etc.

The frame 12 comprises a first, lower frame part 12 comprising attachment parts for attachment to the seatback 3. The attachment parts may include legs 16 or rods or other extensions, connected to each other via a strut 18, the legs 16 being arranged to attach to the seat back e.g. by fitting into openings provided in the seat back or attaching to corresponding attachments parts of the seat back. The frame also comprises a second, upper frame part 14 pivotally attached to the lower frame part. The upper frame part 24 defines the part of the headrest to which the cushioning may be mounted and against which the user's head will rest and so should be of a suitable shape to perform this function. In the example shown, the upper frame part is of a generally rectangular shape having two side arms 26 connected by an uppermost strut 28 defining the top of the frame. An additional reinforcement bar or bars 29 may also be provided across the two arms 26 at another point. In this example, the upper frame part 24 is pivotally attached to the lower frame part 14 at the two arms 26. Other frame shapes and structures, and attachments to the lower frame part, are also possible.

The frame 12 is also provided with a locking/unlocking mechanism 40 to selectively unlock the upper frame part relative to the lower frame part to permit relative pivotal movement and lock the upper frame relative to the lower frame preventing pivotal movement.

The locking/unlocking mechanism 40 is configured to be operated by a user to release locking to allow the upper frame part to be pivoted or rotated relative to the lower frame part if, for example, the user needs to fold down the upper frame part to be able to easily access the area behind the headrest. In one example, the locking/unlocking mechanism is configured such that it locks the upper frame part in a fully opened position - i.e. in the normal headrest position for supporting the head - and in a folded position e.g. 90 degrees relative to the fully open position. In an example, described further below, the locking/unlocking mechanism only locks the upper frame part in these two positions.

In one example, which is simple for the user to operate, the locking/unlocking mechanism comprises a spring-loaded push button 42 connected to a shaft 44 that extends through the pivot point between the upper and lower frame parts. In the example shown where the upper frame part has two arms that connect to two sides of the lower frame part, the locking/unlocking mechanism comprises such a push button and shaft assembly on each side of the frame extending through the connection points between the arms and the lower frame part. The push button and shaft are biased by the spring 43 into a locked position. By pushing the button 42 against the force of the spring 43, the shaft 44 is pushed out of the locked position into a release position which allows the upper frame 24 to then be pivoted or folded, by the user, relative to the lower seat part. When the upper part is then in the fully open or folded position, the button and shaft then return to the default position due to the spring force to lock the mechanism and, therefore, lock the upper frame part relative to the lower frame part.

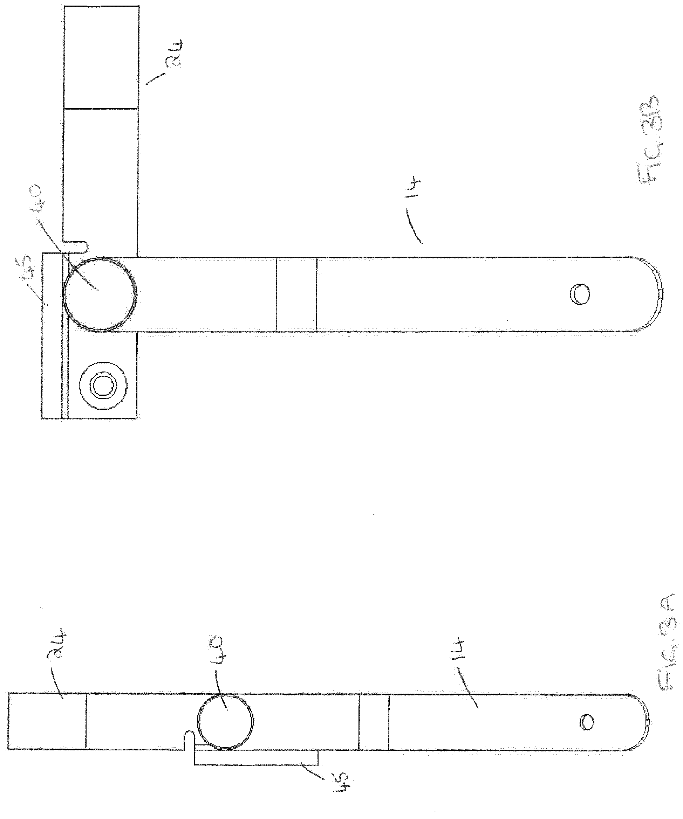

Figures 3A and 3B show an example of the two positions of the upper frame part 24 relative to the lower frame part 14. Figure 3A shows the upper frame part 24 in the fully open position. In this position, in the example, the locking/unlocking mechanism is in the locked state which prevents the upper frame part moving beyond the fully open position or returning to the folded position unless activated by the user e.g. by pressing the button 42 again. Figure 3B shows the frame with the upper frame part 24 in the folded state (approx. 90 degrees) relative to the lower frame part 14.

In one example, the locking/unlocking mechanism 40 may further include a retainer part 45 which prevents the upper seat part being pivoted beyond the fully open position shown in Fig. 3A. In the example shown, this is in the form of a retainer plate 45 that pivots with the upper frame part and abuts against the lower frame part 14 when the upper frame part is in the fully open position so that the lower frame part prevents further pivotal movement of the retainer plate and, therefore, the upper frame part.

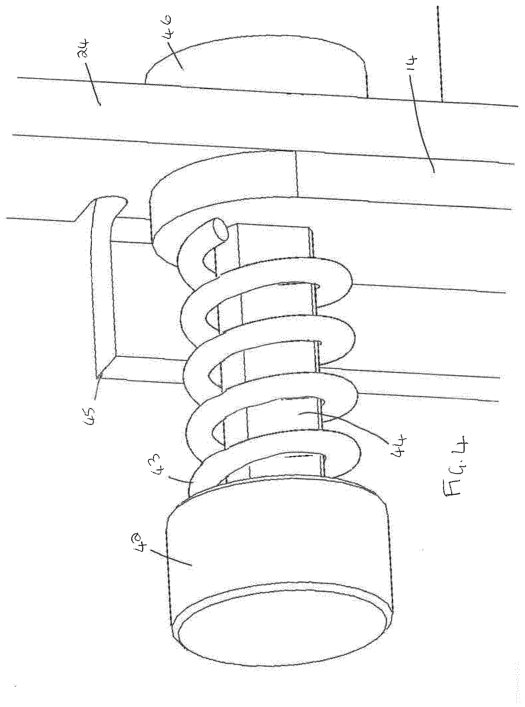

An example of the locking/unlocking mechanism 40 is shown in Fig. 4 and comprises a push button 42 attached to a shaft 44 that extends through the upper and the lower frame parts where they connect at the pivot point. The push button 42 is provided on an outer side of the frame, accessible by the user and the shaft 44 extends through a frame hole 48 at the pivot point between the upper and lower frame parts and terminates in a locking member e.g. a locking screw 46 on the inner side of the frame.

The default position of the headrest is with the upper frame part 24 fully open relative to the lower frame part 14 (such as shown in Fig. 3A) and, in this position, the locking/unlocking mechanism 40 is biased to its locked position. This will be described further below. In the example, in this position, the push button 42, and therefore, the shaft 44 and the lock screw 46 are biased to the locked position by means of a spring 43 located between the frame 12 and the push button 42. In this biased position, the lock screw 46 engages with the pivot point, to lock this against pivotal rotation - i.e. to prevent the upper frame part rotating relative to the lower frame part about the pivot point.

To unlock the mechanism 40, the user presses the push button 42 towards the frame 12 against the force of the spring 43. This pushes the shaft further through the opening at the pivot point pushing the lock screw 46 away from the pivot point, which releases the lock and enables the upper frame part to be rotated or pivoted to the folded position by the user.

In the folded position, provided the user is no longer pressing the push button 42, the mechanism will return to the locked position under the force of the spring 44 to lock the upper frame part in the folded position. The user can then re-open the upper frame part by again pressing the push button to release the lock screw to allow the upper frame part to be pivoted open.

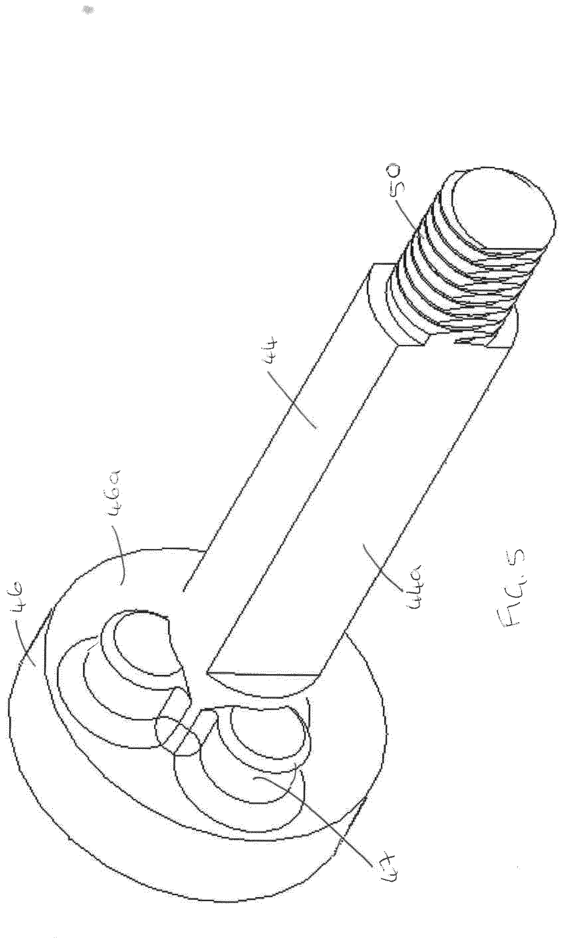

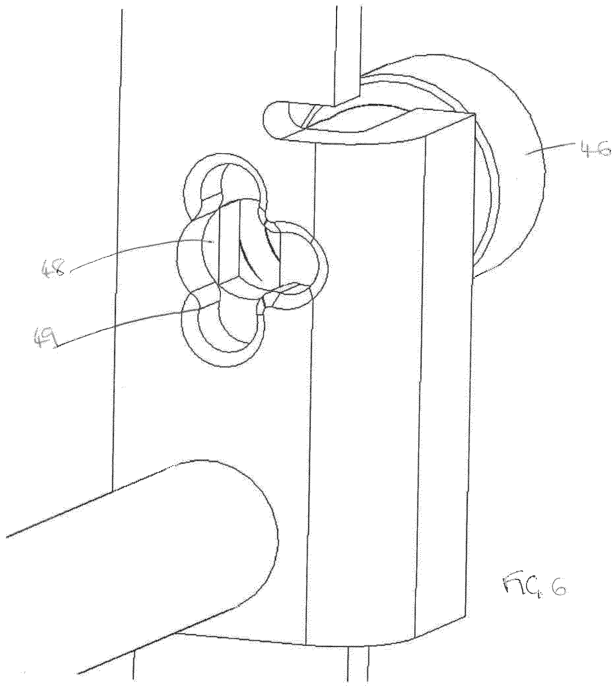

Whilst various configurations can be envisaged to provide the locking features, one example is shown in Figures 5 and 6. In this example, the shaft 44 is shaped to prevent rotation when in the locked state. For example, the shaft 44 may be provided with one or two flat sides 44a, the lock screw 46 is provided on its inner surface 46a (i.e. the surface adjacent the frame parts, in use) with surface features 47 that function as locking features and the opening 48 in the frame parts at the pivot point, through which the shaft extends, has shaped receptacle parts 49 to cooperate with the locking features 47. The shape of the cooperating opening and locking features is selected such that when the upper frame is in the fully open position, and the spring 43 biases the lock screw 49 towards the opening, the locking features 47 on the lock screw fit into and lockingly engage in the receptacle parts 49 and so the upper frame part is locked against rotation relative to the lower frame part. To unlock, the locking mechanism is actuated by the user to move the locking features out of engagement with the receptacles. In the example shown, this is done by the user pressing the push button 42. The push button is not shown in Figs. 5 and 6, but would be attached to the end of the shaft opposite the end where the lock screw is provided. The push button can be attached in various ways e.g. via a threaded attachment 50. Pressing the button 42 compresses the spring 43 between the button and the frame and pushes the shaft further through the opening, thus pushing the lock screw 46 away from the opening 48 so disengaging the locking features 47 from the receptacles 49. When the locking features no longer engage with the receptacles, the upper frame part is unlocked and can be pivoted, by the user, relative to the lower frame part.

In the folded position (e.g. as shown in Fig. 3B), due to the shape of the opening and the shape and position of the locking features, and due to the force of the spring (provided the push button is no longer being pressed) the spring force brings the locking features back into engagement in the receptacles to lock the upper frame part in the folded position.

In the example shown, the locking features and receptacles are shown having rounded shapes and formed in a T-shape. Other shapes and design of locking feature and receptacle which define two distinct locking positions are also possible.

The headrest of this disclosure allows the upper part of the headrest to be folded easily by a user by rotating only one part of the headrest, and ensures that the rotating part locks at its end positions.

## Claims

1. A seat headrest comprising:
a headrest frame (12) having:
a lower frame part (14) configured to be attached to a seat back;
an upper frame part (24) pivotally attached to the lower frame part at a pivot point to be moveable between a fully open position and a folded position;
and
a locking mechanism (40) at the pivot point to releasably lock the upper frame part relative to the lower frame part in the fully open position and the folded position, the locking mechanism including a release member (42) for operation by a user to release the lock to enable the upper frame part to be pivoted relative to the lower frame part.

2. The seat headrest according to claim 1, wherein the locking mechanism (40) comprises a shaft (44) extending through an opening (48) in the upper and the lower frame parts at the pivot point, a locking member (46) mounted on the shaft at a first end, and a spring (43) arranged to bias the locking member into locking engagement with the opening.

3. The seat headrest of claim 1 or 2, wherein the release member is a push button (42).

4. The seat headrest of claim 3 when dependent on claim 2, wherein the push button is mounted to a second end of the shaft.

5. The seat headrest of claim 4, wherein the spring is secured between the push button and the frame to bias the push button away from the frame.

6. The seat headrest of claim 2 or any claim dependent thereon, wherein the locking member (46) is provided with locking features (47) and the opening (48) defines receptacles (49) shaped to receive the locking features in the fully open and the folded positions, and wherein the locking features are moved out of engagement with the receptacles by operation of the release member (42) to permit pivotal movement of the upper frame part relative to the lower frame part.

7. The seat headrest of claim 2 or any claim dependent thereon, wherein the shaft has one or more flat surfaces (44a) to prevent rotation of the shaft in the opening when in the locked position.

8. The seat headrest of claim 4 or any claim dependent thereon, wherein the push button (42) is attached to the shaft by a threaded attachment (50).

9. The seat headrest of any preceding claim, wherein the lower frame part (14) comprises one or more legs (16) arranged to attach or mount to a seat back.

10. The seat headrest of claim 9, the lower frame part comprising two legs (16) connected by a strut (18).

11. The seat headrest of any preceding claim, the upper frame part comprising two arms (26) connected by a strut (28).

12. The seat headrest of claim 11, further comprising a reinforcement strut (29) between the arms (26).

13. The seat headrest of any preceding claim, comprising a locking/unlocking mechanism (40) on each of opposing sides of the frame (12).

14. The seat headrest of any preceding claim, further comprising cushioning over the frame.
